# EUROPEAN PATENT APPLICATION

(11) **EP 3 422 134 A1**
(43) Date of publication of application: **02.01.2019**
(21) Application number: 18179792.9
(22) Date of filing: 26.06.2018
(51) Int. Cl.: G05D 1/10, B64C 19/00, B64C 39/02

(54) **METHOD FOR FLYING AT LEAST TWO AIRCRAFT**

(30) Priority: 29.06.2017 US 201715637649
(71) Applicant: General Electric Company, Schenectady, NY 12345 (US)
(72) Inventor: FELDMANN, Michael Steven, Grand Rapids, MI Michigan 49512-1934 (US); ROUTSON, Gregory Scott, Grand Rapids, MI Michigan 49512-1934 (US)
(74) Representative: Williams, Andrew Richard

(57) **Abstract**

Methods for flying at least two aircraft 302, 304 in a predetermined formation 370 include emitting from one of the aircraft a relative navigation grid, calculating a spatial relationship, by a controller module 372, between the at least two aircraft 302, 304, determining, by the controller module 372 if the spatial relationship conforms with the predetermined formation 370, and altering a relative position of at least one aircraft 302, 304 when the spatial relationship does not conform with the predetermined formation 370.

## Description

### BACKGROUND

Formation flying, sometimes referred to as station keeping, wherein multiple aircraft are flown in close proximity, can be desired for a multitude of reasons including force multiplication, collaboration or fusion of disparate sensor data, radar signature minimization, reduction in the amount of time or fuel required to traverse an area with a fleet of aircraft, etc. Such flight in close proximity to other aircraft increases the risk of aircraft interfering with the flight of another. Establishing and maintaining the desired separation between such aircraft can be done visually in good weather by highly skilled pilots. In poor weather, or in the case of unmanned aircraft, ensuring desired separation requires an alternate means for determining relative position and velocity between participating aircraft.

### BRIEF DESCRIPTION

In one aspect, the present disclosure relates to a method of flying at least two aircraft, the method including emitting from one of the at least two aircraft a relative navigation grid to define an emitted relative navigation grid, calculating a spatial relationship, by a controller module, between the at least two aircraft based on the emitted relative navigation grid, determining, by the controller module, if the spatial relationship conforms with a predetermined formation, and altering a relative position of at least one aircraft to position the at least two aircraft in the predetermined formation when the spatial relationship does not conform with the predetermined formation. The predetermined formation positions one of the at least two aircraft within a wingtip vortex created by another of the at least two aircraft.

In another aspect, the present disclosure relates to a method of flying multiple aircraft, the method including emitting from a leading aircraft a relative navigation grid, obtaining, by a trailing aircraft, a signal from the relative navigation grid, calculating, by a controller module of the trailing aircraft, a spatial relationship between the leading aircraft and the trailing aircraft based on the signal from the relative navigation grid, determining, by the controller module, if the spatial relationship conforms with a predetermined formation, and altering a relative position of at least one of the leading aircraft or the trailing aircraft to position the trailing aircraft within a wingtip vortex created by the leading aircraft according to the predetermined formation.

In yet another aspect, the present disclosure relates to a method of flying multiple aircraft, the method including emitting from a leading aircraft a relative navigation grid, obtaining, by a trailing aircraft, a signal from the relative navigation grid, calculating, by a controller module of the trailing aircraft, a spatial relationship between the leading aircraft and the trailing aircraft based on the signal from the relative navigation grid, determining, by the controller module, if the spatial relationship conforms with a predetermined formation, and maintaining a relative position of at least one of the leading aircraft or the trailing aircraft to position the trailing aircraft within a wingtip vortex created by the leading aircraft according to the predetermined formation.

### BRIEF DESCRIPTION OF THE DRAWINGS

In the drawings:
FIG. 1 is a perspective view of aircraft and a grid generator in accordance with various aspects described herein.
FIG. 2 is a perspective view of aircraft, a grid generator, and a reflector in accordance with various aspects described herein.
FIG. 3 is a perspective view of aircraft, a grid generator, and optical data links in accordance with various aspects described herein.
FIG. 4 is a top down schematic view of a formation of aircraft in accordance with various aspects described herein.
FIG. 5 is an example a flow chart diagram of demonstrating a method of flying aircraft in accordance with various aspects described herein.

### DESCRIPTION OF EMBODIMENTS

The aspects of the present disclosure are related to methods for flying aircraft in a predetermined formation based on a relative navigation grid.

While "a set of' various elements will be described, it will be understood that "a set" can include any number of the respective elements, including only one element. As used herein, the terms "leading" or "trailing" aircraft refer to a relative upstream or downstream (e.g. forward or rear) dimension along a direction of travel, vector, heading, or the like. All directional references (e.g., radial, axial, upper, lower, upward, downward, left, right, lateral, front, back, top, bottom, above, below, vertical, horizontal, clockwise, counterclockwise) are only used for identification purposes to aid the reader's understanding of the disclosure, and do not create limitations, particularly as to the position, orientation, or use thereof.

Also as used herein, while sensors can be described as "sensing" or "measuring" a respective value, signal, grid, or the like, sensing or measuring can include determining a value indicative of or related to the respective value, rather than directly sensing or measuring the value itself. The sensed or measured values can further be provided to additional components. For instance, the value can be provided to a controller module or processor, and the controller module or processor can perform processing on the value to determine a representative value or an electrical characteristic representative of said value.

Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other.

As used herein, a "system" or a "controller module" can include at least one processor and memory. Non-limiting examples of the memory can include Random Access Memory (RAM), Read-Only Memory (ROM), flash memory, or one or more different types of portable electronic memory, such as discs, DVDs, CD-ROMs, etc., or any suitable combination of these types of memory. The processor can be configured to run any suitable programs or executable instructions designed to carry out various methods, functionality, processing tasks, calculations, or the like, to enable or achieve the technical operations or operations described herein. The program can include a computer program product that can include machine-readable media for carrying or having machine-executable instructions or data structures stored thereon. Such machine-readable media can be any available media, which can be accessed by a general purpose or special purpose computer or other machine with a processor. Generally, such a computer program can include routines, programs, objects, components, data structures, algorithms, etc., that have the technical effect of performing particular tasks or implement particular abstract data types.

The exemplary drawings are for purposes of illustration only and the dimensions, positions, order and relative sizes reflected in the drawings attached hereto can vary.

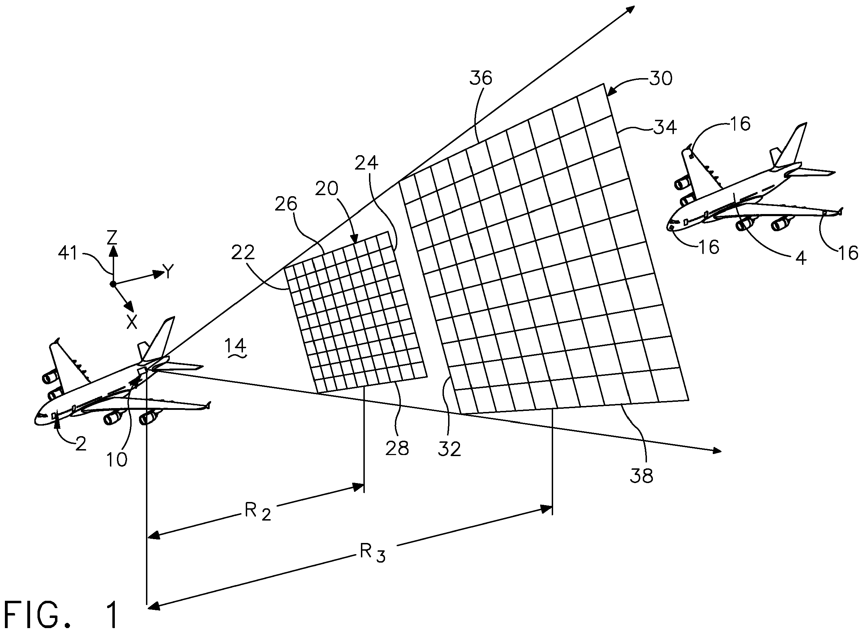

FIG. 1 illustrates a non-limiting aspect of the disclosure including a first aircraft 2 and a second aircraft 4. In the illustrated example, the first aircraft 2 is illustrated "ahead" or "upstream" of the second aircraft 4 in the relative space. In this sense, the first aircraft 2 is a "leading" aircraft and the second aircraft 4 is a "trailing" aircraft. The first aircraft 2 can be equipped with a grid generator 10, which can include a generator configured or adapted to project a relative navigation grid, such as a set of intersecting lines, into space within a field of transmission 14. In this sense, the first aircraft 2 can be an "emitting" aircraft 2. Non-limiting aspects of the relative navigation grid or grid generator 10 are described in the disclosure in US 7,681,839, issued Mar. 23, 2010, entitled Optical Tracking System For Refueling, and US 2011/0153205, published June 23, 2011, entitled Relative Navigation System, which are incorporated by reference.

As illustrated, non-limiting aspects of the projected relative navigation grid can include intersecting lines. At some distance away from the grid generator 10, these intersecting lines are observed as a grid in space, with the size of the relative navigation grid increasing away from the grid generator 10. The relative navigation grid in space generated by the grid generator 10 can be detected and read by at least one detector module 16 of the second aircraft 4. As shown, the second aircraft 4 can include a set of detector modules 16, schematically illustrated on the wings or fuselage. For relative navigation between the first aircraft 2 and the second aircraft 4 it is presumed that at least a subset of the detector modules 16 of the second aircraft 4 lies within the field of transmission of the grid generator 10, enabling the subset of detector modules 16 to "see," sense, receive, or otherwise obtain at least a portion of the relative navigation grid. The illustrated example of the set of detector modules 16 is merely one non-limiting example of detector module 16 positioning, and alternative or additional detector module 16 positions are envisioned. In this sense, the second aircraft 4 can be a "receiving" aircraft 4. While aspects of the disclosure are illustrated with respect to commercial aircraft 2, 4, the disclosure is equally applicable for non-commercial aircraft, including, but not limited to, unmanned aerial vehicles (UAVs).

For description purposes, the grid generator 10 can be thought of as projecting intersecting lines substantially in the y direction of a coordinate system 41. If one were to observe the projection of intersecting lines in the x-z plane at some distance R₂ away from the grid generator 10, one would observe a first relative navigation grid 20. If one were to observe the same projection of intersecting lines at a distance R₃, which is greater than the first distance R₂ in the y direction (relative to the coordinate system 41), one would observe a second relative navigation grid 30, which appears relatively larger than the first relative navigation grid 20. While aspects of the disclosure are shown and described as projecting the relative navigational grid from the first aircraft 2 in the y direction of the illustrated coordinate system 41 (e.g. rearwardly from the first aircraft 2), non-limiting aspects of the disclosure can be included wherein the second aircraft 4 can project the relative navigational grid toward the first aircraft 2 (e.g. in the -y direction of the illustrated coordinate system 41), and wherein the first aircraft 2 can include a set of detector modules 16 adapted to obtain at least a portion of the relative navigational grid.

The first relative navigation grid 20 at distance R₂ away from the grid generator 10 is spatially bound in the horizontal direction by a first vertical line 22 and a second vertical line 24. There exists a set of vertical lines spatially and temporally generated in between the first vertical line 22 and the second vertical line 24. The first relative navigation grid 20 at a distance R₂ away from the grid generator 10 is spatially bound in the vertical direction by a first horizontal line 26 and a second horizontal line 28. There exists a set of horizontal lines spatially and temporally generated in between the first horizontal line 26 and the second horizontal line 28. The distance R₂ can be any distance between the relative navigation grid 20 and the grid generator 10.

The second relative navigation grid 30 at distance R₃ away from the grid generator 10 is for all practical purposes the same as the first relative navigation grid 20, but at further distance from the grid generator 10 than the first relative navigation grid 20. The second relative navigation grid 30 is spatially bound in the horizontal direction by a first vertical line 32 and a second vertical line 34. There exists a set of vertical lines spatially and temporally generated in between the first vertical line 32 of the second relative navigation grid 30 and the second vertical line 34 of the second relative navigation grid 30. The second relative navigation grid 30 at a distance R₃ away from the grid generator 10 is spatially bound in the vertical direction by a first horizontal line 36 of the second relative navigation grid 30 and a second horizontal line 38 of the second relative navigation grid 30. There exists a set of horizontal lines spatially and temporally generated in between the first horizontal line 36 of the second relative navigation grid 30 and the second horizontal line 38 of the second relative navigation grid 30.

The similarity of the relative navigation grids 20, 30 becomes apparent in the case of projected grid lines, where the second relative navigation grid 30 is formed by the same lines forming the first relative navigation grid 20, except that the second relative navigation grid 30 is observed at a further distance from grid generator 10 compared with the first relative navigation grid 20, making the second relative navigation grid 30 appear larger than the first relative navigation grid 20. In this sense, the second relative navigation grid 30 is the appearance of the grid lines generated by the grid generator 10 at the distance R₃ whereas the first relative navigation grid 20 is the appearance of the grid lines at the distance R₂.

The relative navigation grids 20, 30 can be of any number of lines. As illustrated, they are comprised of eleven vertical lines by eleven horizontal lines. A relative navigation grid 20, 30 comprised of a greater number of intersecting lines can result in improved detection for a fixed field of transmission 14 and distance from the detector module 16 than a relative navigation grid 20, 30 comprised of a fewer number of intersecting lines. The relative navigation grids 20, 30 are depicted as a square shape, but any geometric shapes, contours, projections, or the like, are envisioned. The relative navigation grid 20, 30 can be any shape including rectangular, oval, or circular. Furthermore, the intersecting lines of the relative navigation grids 20, 30 are depicted as orthogonal; however, additional or alternative configurations are envisioned. The angles between the intersecting lines can be right angles, acute angles, or obtuse angles in different parts of the relative navigation grid 20, 30.

The vertical and horizontal lines can be formed in any suitable manner by the grid generator 10. In non-limiting aspects of the disclosure, all of the lines can be formed sequentially or all at once. In another non-limiting aspect of the disclosure, a set of grid generators 10 can cooperate to project the relative navigation grid 20, 30, or a corresponding set of relative navigation grid 20, 30. In another non-limiting aspect of the disclosure a subset of the vertical lines or horizontal lines can be formed before the other.

In yet another non-limiting aspect of the disclosure, the grid generator 10 can alternate between projecting or forming vertical and horizontal lines. When the grid generator 10 uses a scanning laser to form the relative navigation grid 20, 30, the laser will sequentially form all of one of the vertical and horizontal lines, followed by the sequential forming of the other of the vertical and horizontal lines. The rate at which the lines are sequentially formed can be so fast that for practical purposes, it is as if all of the grid lines were simultaneously formed. The radiation source for the set of projected lines can be a coherent or incoherent radiation source. For example, when the radiation source is a coherent source, it can be a solid state laser that emits radiation at a wavelength in the near-UV range, in the infrared range, or the like. Additionally, the radiation frequency and/or intensity can be selected, or attenuated by use of an optical filter, to reduce the risk of eye damage. The grid of intersecting projected lines can be generated by raster scanning each of the lines or by projecting and scanning an elongated radiation beam. Any suitable methods and apparatus for generating the intersecting lines can be used.

While the illustrated coordinate system 41 utilizes Cartesian coordinates, any appropriate coordinate system can be used, including polar, cylindrical, or spherical coordinate systems for both grid generation and for grid detection. For example, to form a grid amenable to polar coordinate representation, a series of concentric circles and lines radiating out from the center of those circles can be projected by the grid generator into space.

Grid data can be encoded at one or more locations of the relative navigation grid 20, 30. By grid data, it is meant that the structure or characteristic of the relative navigation grid provides data or information that can be read or detected by the detector module 16. In one non-limiting aspect, the projected lines comprising the series of projected intersecting lines are further encoded with different grid data in different regions of the relative navigation grid to indicate regions within the grid of intersecting lines. In another non-limiting aspect, the projected line can be further encoded with flight or aircraft information, including, but not limited to, flight or aircraft information related to at least one of the projecting or emitting aircraft (e.g. the first aircraft 2, or aircraft with the grid generator 10) or the receiving aircraft (e.g. the second aircraft 4, or aircraft with the set of detector modules 16). Non-limiting aspects of the flight or aircraft information can include aircraft weight, heading, trajectory, flight plan, airspeed, type or model of aircraft, fuel levels, and the like. In another non-limiting aspect, the grid data can include timing data selected or adapted to transmit, convey, communicate, or the like the relative navigation grid 20, 30 based on a predetermined timing period.

One non-limiting manner of encoding of the grid data can be included wherein modulating the beam, as in the case of a laser being used to form the relative navigation grid 20, 30. The modulation is achieved by changing the intensity of the beam, blocking the beam with some periodicity, or a combination thereof. In another non-limiting aspect of the disclosure, the grid data can include a number or value, and it is contemplated that each of the grid lines can include a number or value that identifies the corresponding grid line to the set of detector modules 16 of the aircraft 4. In yet another non-limiting aspect of the disclosure, the grid data can include or be encoded with data that may otherwise be transmitted between the aircraft 2, 4, for example, by way of a separate data link.

For example, the relative navigation grid 20, 30 can be encoded with data that indicates the exact position within the relative navigation grid 20, 30 that defines the relative position of that point to the emitting aircraft 2. Each scanning beam or portion of the relative navigation grid has a defined and fixed reference position to the emitting aircraft 2. During formation flying the aircraft 4 with the set of detector modules 16 can detect this modulated signal and, by decoding the signal, can determine its position relative to the emitting aircraft 2 and its position can be adjusted accordingly. In this manner, the aircraft 4 can be considered a "reading" aircraft that reads the emitted relative navigation grid 20, 30. The aircraft 4 can calculate the spatial relationship between it and the emitting aircraft 2 based on its reading of the emitted relative navigation grid. The calculation of the spatial relationship can be conducted by a processor (not shown) aboard the aircraft 4.

It will be understood that during operation, the grid generator 10 can form repeated relative navigation grid 20, 30 projections and a complete relative navigation grid 20, 30 can be projected multiple times a second. The relative navigation grid 20, 30, as detected by the set of detector modules 16 can appear to jump around or jitter, making it difficult for the second aircraft 4 to follow the relative navigation grid 20, 30. In reality, while the relative navigation grid 20, 30 can appear jumpy, it typically will not have substantively moved. The relative navigation grid 20, 30 can be stabilized to account for such movement of the grid generator 10 and provide a relative navigation grid 20, 30 that appears relatively stable. Such stabilization has been described in the disclosure 13/286,710, filed November 1, 2011, and entitled Relative Navigation System, which is incorporated by reference.

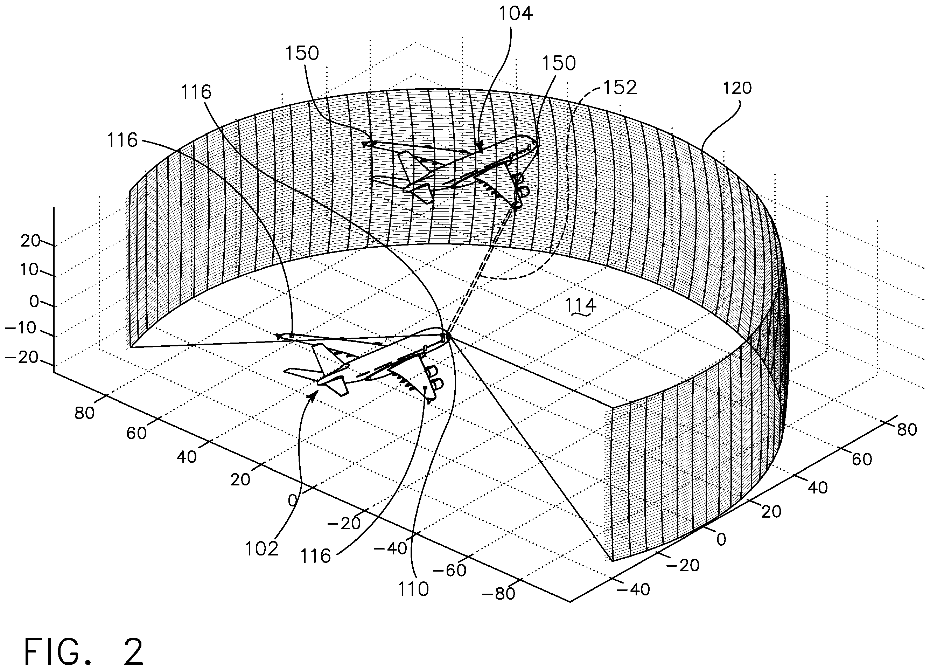

As there can be any number of aircraft 2, 4 flying in the formation a larger envelope for the relative navigation grid can be included. FIG. 2 illustrates another relative navigation grid 120 and aircraft 102, 104 according to another non-limiting aspect of the disclosure. These non-limiting aspects of the disclosure are similar to the above-described aspects; therefore, like parts will be identified with like numerals increased by 100, with it being understood that the description of the like parts of the above-described aspects apply to the current disclosure aspects, unless otherwise noted.

One non-limiting difference between the above-described aspects and the current aspects is that the first aircraft 102 (i.e. the emitting aircraft 102) can include a grid generator 110 capable of producing a relative navigation grid 120 having a larger field of transmission than that produced by the grid generator 10. More specifically, the grid generator 110 is illustrated as creating an exemplary relative navigation grid 120 that has a field of transmission 114 that is a +/- 100 degree equatorial section (200 degrees total) of a sphere with a height of +/- 20 degrees. It is contemplated that the grid generator 110 can be configured to create a variety of shapes and sizes for the field of transmission 114 such that the relative navigation grid can be emitted in particular sectors of a hemisphere relative to the emitting aircraft 102.

Another non-limiting difference between the above-described aspects and the current aspect is that the first aircraft 102 can be the trailing aircraft, relative to a second leading or receiving aircraft 104. Yet another non-limiting difference is that the second aircraft 104 is illustrated as including a set of optical reflectors 150 instead of a set of detector modules. The second aircraft 104 can include any number of such optical reflectors 150 and such optical reflectors 150 can be placed at any suitable alternative location on the aircraft 104. Further, the first aircraft 102 is illustrated as including a set of detector module 116 or other grid reader. During formation flying, one or more of the optical reflectors 150 can return at least a portion of the transmitted grid back to the emitting aircraft 102; this is schematically illustrated with the reflection 152. More specifically, the optical reflector 150 reflects the portion of the grid that it "sees" from the emitting aircraft 102, back to the emitting aircraft 102. Thus, depending on the shape of the optical reflector 150 the reflection or portion of the grid reflected back can vary. The set of detector modules 116 of the emitting aircraft 102 can read the reflected signal and by decoding the signal the emitting aircraft 102 can determine its position relative to the reflecting aircraft 104. Unlike the above-described aspects of the earlier figures, in the current aspects of the disclosure, the reading aircraft and the emitting aircraft are the same first aircraft 102. Once the emitting aircraft 102 knows the grid position of the optical reflector 150 on the aircraft 104 its position can be adjusted accordingly.

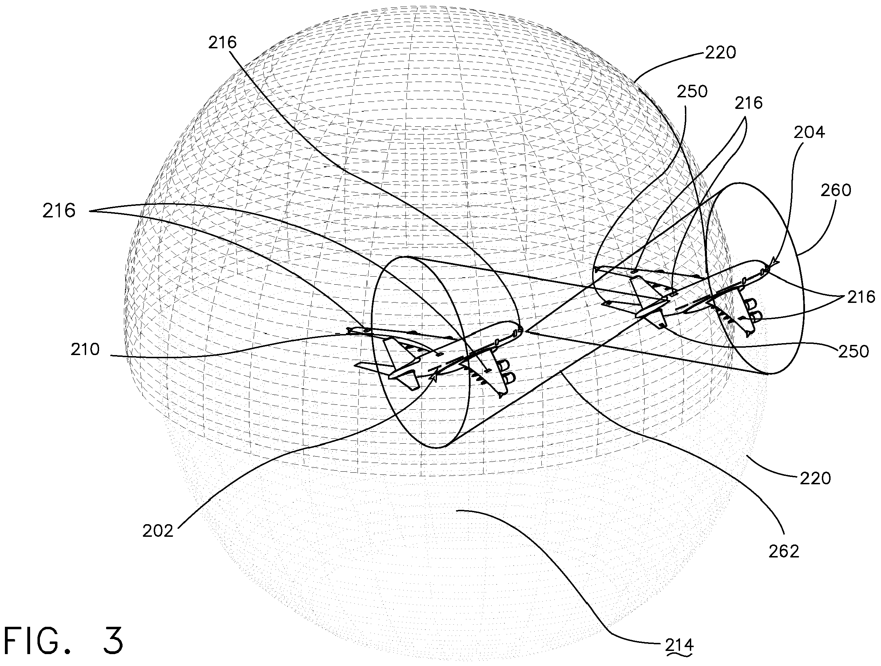

FIG. 3 illustrates yet another aspect of the disclosure including a first aircraft 202 and a second aircraft 204 according to another aspect of the disclosure. The current aspects are similar to the above-described aspects; therefore, like parts will be identified with like numerals increased by 200, with it being understood that the description of the like parts of the earlier aspects apply to the current aspects of the disclosure, unless otherwise noted.

The first aircraft 202 is illustrated as including multiple grid generators 210 that are configured to transmit relative navigation grids 220 that collectively form a field of transmission 214 that create two somewhat opposing hemispheres around the first aircraft 202 (i.e. the emitting aircraft 202). The relative navigation grids 220 can also be aligned such that the field of transmission 214 creates a sphere around the first aircraft 202. In this manner the relative navigation grid can be emitted in such a manner that any blind spots relative to the emitting first aircraft 202 are eliminated. The relative navigation grid 220 can be emitted from multiple locations on the emitting aircraft 202 and any number of grid generators can be used to create such a spherical field of transmission 214 around the emitting aircraft 202 including that a single grid generator 210 can be configured to transmit such a field of transmission 214 around the first aircraft 202.

It has been contemplated that the information related to the relative positions of the aircraft can be broadcast between the aircraft 202, 204. In such an instance, the reading aircraft (i.e. the second aircraft 204) can transmit the spatial relationship to the emitting aircraft 202 and the emitting aircraft 202 can adjust its position if necessary. The emitting aircraft 202 has been illustrated as including an optical data link 260, schematically illustrated as a conical transmission pathway, extending from the first aircraft 202 toward the second aircraft 204. Similarly, the second aircraft 204 has been illustrated as including an optical data link 262 directed toward the first aircraft 202. It will be understood that the optical data links 260, 262 can include any suitable communication having a certain range or field of transmission. The optical data links 260, 262 can be capable of transmitting and receiving data from collaborating or cooperative aircraft that are suitably equipped, as described herein, including grid data aspects. Non-limiting aspects of the optical data links 260, 262 can include broadcasting or receiving the data links 260, 262 in the radio frequency (RF) or the optical spectrum. In instances where the radio frequency spectrum is used, any suitable radio frequency transmitters, receivers, transceivers, or the like, can be used. In instances where the optical spectrum is used, lasers, light emitting diodes, or the like, can be employed as transmitters, along with suitable optical receivers.

The aircraft 204 has been illustrated as including optical reflectors 250 and the first aircraft 202 can include a set of detector module 216, which could be a separate module as illustrated or could be included in the grid generators 210. In another non-limiting aspect of the disclosure, the second aircraft 204 can include a set of detector modules 216 in place of, or in addition to, the first aircraft 202 having the set of detector modules 216. As described above, the aircraft 202 and 204 can determine their relative position, as described herein. Once one of the two aircraft 202 and 204 knows the relative position between the two aircraft 202 and 204 this information can be transmitted via the optical data links 260 and 262 to the other of the aircraft and one or both of the aircraft can adjust their positions accordingly.

It is contemplated that for any of the above aspects that the size and field of regard of the generated relative navigation grid can be tailored to mission and flight profile requirements. While all of the examples given so far have include two aircraft it will be understood that any number of aircraft can fly in formation and adjust their relative positions if they are so suitable equipped. While aspects of the disclosure are described wherein the "leading" aircraft includes the grid generator, further non-limiting aspects of the disclosure can be included wherein the trailing aircraft includes the grid generator while the leading aircraft includes the set of detectors. Any permutation of leading or trailing aircraft, and grid generators or detector modules can be included. If the multiple aircraft are equipped with optical data links the multiple aircraft can be capable of maintaining relative navigation with only one aircraft 202, 204 equipped with a grid generator 210. It is contemplated that in such an instance the reading aircraft can transmits the spatial relationship to the others of the multiple aircraft.

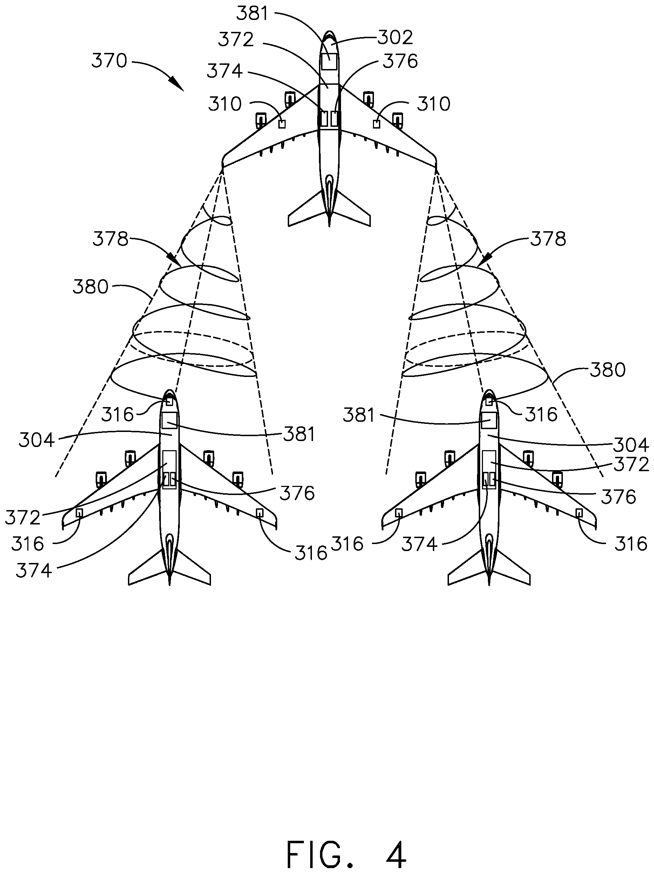

FIG. 4 illustrates another aspect of a first aircraft 302 and a set of second aircrafts 304. As shown, the first aircraft 302 and the set of second aircrafts 304 can be flown in proximity, in a predetermined formation 370. The first aircraft 302 and the set or a subset of the second aircraft 304 can include a respective controller module 372 having a processor 374 and memory 376. Non-limiting aspects of the disclosure can be included wherein the respective controller modules 372 of the aircraft 302, 304 can be substantially similar in components, operation or functionality, or a combination thereof. While FIG. 4 is directed to the non-limiting disclosure of the predetermined formation 370, aspects of the first aircraft 302, or the set or subset of second aircraft 304 can also include the above described aspects of the grid generators 10, 110, 210, 310, sets of detectors 16, 116, 216, 316, optical reflectors 150, 250, optical data links 260, 262, or the like to enable the projection and obtaining or receiving of the relative navigational grids 20, 30, 120, 220 between the aircraft 302, 304. The relative navigation grids description and illustrations are not duplicated in FIG. 4 for brevity.

As is well-understood, the first aircraft 302 (i.e. the leading aircraft) can generate a set of vortices 378 during flight that extend rearwardly from the respective wing tips (i.e. a "wake" or "wingtip vortices"). The wingtip vortices 378 can be limited or estimated to reside within a generally conical "wash area" 380. At least a portion of the wingtip vortices 378 or the wash area 380 can generate lift in a trailing aircraft 304 flying or following within a known area or spatial relationship to the first aircraft 302. Thus, it is desirable to fly or operate the set of trailing aircraft 304 within the known area or spatial relationship of the wingtip vortices 378 or wash area 380 of a leading aircraft 302 such that the wingtip vortices 378 or wash area 380 generates lift on the set of trailing aircraft 304. In addition to generating lift on the set of trailing aircraft 304, the wingtip vortices 378 or wash area 380 can further reduce drag experienced by the set of trailing aircraft 304, which can in turn increase flight operation range or fuel economy. This predetermined formation 370 is sometimes referred to as a "V" formation, a skein, or a "Vic" formation. Aspects of the disclosure can be included wherein the predetermined formation 370 includes any number of aircraft, including only two aircraft (e.g. a leading aircraft and a trailing aircraft).

During operation, the first aircraft 302 can emit a relative navigation grid, as explained above, at least encompassing a portion of the set of second aircraft 304. The set of second aircraft 304 can operably receive, obtain, or the like, at least a portion of the relative navigation grid, which can be, for example, encoded with grid data. In non-limiting aspects of the disclosure, each individual trailing aircraft 304 can independently calculate a spatial relationship between at least the leading aircraft 302 and itself. In one non-limiting aspect, the calculating can be accomplished or enabled by the respective controller module 372 or processor 374 of the trailing aircraft 304. The calculated spatial relationship can include a current relationship between the aircraft 302, 304, as opposed to a desired relationship between the aircraft 302, 304. In another non-limiting aspect, the calculated spatial relationship can be a tiered calculation, for example, between the leading aircraft 302 and a trailing aircraft 304, then between the trailing aircraft 304 and another trailing aircraft 304, for example, positioned in parallel with the trailing aircraft 304.

The trailing aircraft 304 can then determine, for instance, in the controller module 372 or processor 374, if the calculated spatial relationship between the aircraft 302, 304 conforms to the predetermined formation 370 to achieve increased lift or reduced drag, as explained above. In instances wherein the calculated spatial relationship differs from, or does not satisfy the predetermined formation 370, at least one of the leading aircraft 302 or trailing aircraft 304 can alter its relative position to position the trailing aircraft 304 closer to, or within tolerance of the predetermined formation 370.

In one non-limiting aspect of the disclosure, the aircraft 302, 304 can operate in a closed-loop control system, that is, at least one of the aircraft can operate to fly in the predetermined formation 370 by utilizing only the receiving of the relative navigational grid, and other systems self-contained by the aircraft 302, 304. In another non-limiting aspect of the disclosure, the aircraft 302, 304 can utilize grid data, optical link data, or the like, to enable additional communication between the aircraft 302, 304.

In further non-limiting aspects of the disclosure, at least one of calculating the spatial relationship or the determining if the spatial relationship conforms with the predetermined formation can be based on, for example, grid data or communications between the respective aircraft 302, 304. In one non-limiting aspect, the grid data can include timing data, flight information of at least one aircraft 302, 304, aircraft information of at least one aircraft 302, 304, aircraft 302, 304 weight, aircraft 302, 304 heading, aircraft 302, 304 trajectory, aircraft 302, 304 flight plan, airspeed, type or model of aircraft 302, 304, fuel levels, wind or environmental conditions during flight, spatial distance between the leading and trailing aircraft 302, 304, the like, or a combination thereof. The aforementioned list can all affect the predetermined formation or the calculation of the spatial relationship. For instance, a larger, heavier leading aircraft will create different wingtip vortices 378 or wash areas 380, compared with a smaller, lighter leading aircraft travelling at the same speed in the same conditions. Non-limiting aspects of the aforementioned list can be included in a lookup table, wherein, for instance, the grid data encodes a value representative of the leading aircraft 302, which is used by the trailing aircraft 304 to look up aircraft 302 data in the lookup table.

In yet another non-limiting aspect of the disclosure, the alteration of the relative position of one or both aircraft 302, 304 can be enabled or effectively operable by way of an autoflight or autopilot system, schematically illustrated on the aircraft 302, 304 as box 381. Additional non-limiting aspects of the disclosure can be included wherein, for example, the trailing aircraft 304 projects the relative navigation grid toward the leading aircraft, wherein either or both of the leading and trailing aircraft 302, 304 alter or maintain their relative positions to conform with the predetermined formation 370, or wherein an array of aircraft 302, 304 enable the predetermined formation by way of cascading or overlapping relative navigation grids, as described herein.

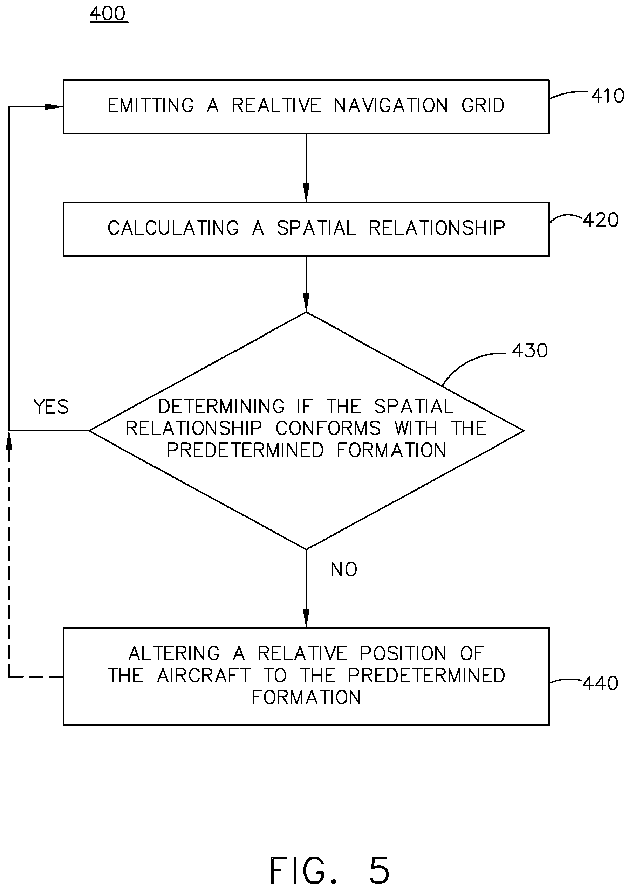

FIG. 5 illustrates a flow chart demonstrating a method 400 of flying at least two aircraft in a predetermined formation, or to fly in close proximity according to a predetermined formation without colliding, in accordance with one aspect of the disclosure. Such a method can be used with any of the above described aspects. By way of non-limiting example, at 410, a relative navigation grid can be emitted from one of the aircraft. Next, the method 400 includes calculating a spatial relationship, for instance, by the controller module, between the at least two aircraft based on the emitted relative navigation grid, at 420. The calculating can be accomplished by the controller module of any of the aircraft, but is typically accomplished by the controller module of the receiving or trailing aircraft. The method 400 continues by determining, for example, by the controller module if the spatial relationship conforms with the predetermined formation, at 430. As used herein, "conforming" with the predetermined formation can include satisfying a threshold value, threshold range, a true/false comparison, satisfying a tolerance, or the like. In one non-limiting aspect of the disclosure, the determination whether the spatial relationship conforms with the predetermined formation can be based on flight or aircraft characteristics that can alter the "conforming" threshold values, ranges, or the like. If the spatial relationship conforms with the predetermined formation ("yes" branch of 430), the method 400 can end or return to emitting a relative navigation grid, at 410.

If the spatial relationship does not conform with the predetermined formation ("no" branch of 430), the method 400 continues to altering a relative position of at least one aircraft to position the aircraft in the predetermined formation, at 440. In one non-limiting aspect, the altering can occur via pilot interaction (e.g. notice is provided to the pilot to alter the course or position of the aircraft, and the pilot responds appropriately). The altering can occur by way of pilot interaction in any of the aircraft, but can typically occur in the trailing aircraft. The method 400 can then end, or can include repeating the emitting, calculating, determining, and altering steps by returning to the emitting a relative navigation grid, at 410.

The sequence depicted is for illustrative purposes only and is not meant to limit the method 400 in any way as it is understood that the portions of the method can proceed in a different logical order, additional or intervening portions can be included, or described portions of the method can be divided into multiple portions, or described portions of the method can be omitted without detracting from the described method. For instance, aspects of the method 400 can further include receiving or obtaining in at least a subset of the detector modules, the emitted relative navigation grid, or the calculating includes calculating at least one of a heading or a trajectory for the leading or trailing aircraft. In another non-limiting aspect of the disclosure, the emitting of the relative navigation grid can include emitting the relative navigation grid in a direction where another aircraft should be in the predetermined formation. The direction can be at least one of forward and rearward along a direction of travel of the emitting aircraft. Alternatively, the direction can be an alternative direction including upwards, downwards, to one sides, or a combination of several directions. In another non-limiting example, it is contemplated that above aspects can also be used with unmanned aircraft and can provide a mechanism for loop closure for the aircraft flight control systems such that unmanned aircraft can coordinate their relative positions and velocities automatically without the need for pilot or external control.

Many other possible aspects and configurations in addition to that shown in the above figures are contemplated by the present disclosure. The aspects disclosed herein provide a method and apparatus for flying at least two aircraft in a predetermined formation. The technical effect is that the above described aspects of the disclosure enable flying in conformance with the predetermined formation based on the inputs and control schema described herein. The above described aspects provide for a number of benefits. For example, the above described aspects can allow for formation flying with much higher precision, much faster data rates, and lower observable relative navigation information at a lower cost than contemporary systems. The aspects described above can be used to make determinations in real time or near real time and the determinations can be carried out automatically and reliably without human intervention or constant maintenance in order to meet requirements of specific applications and to reduce system operation cost.

Yet another advantage of the above described aspects is by flying in the predetermined formation, that is, wherein the aircraft is positioned within the wingtip vortices or the wash area to generate lift on the trailing aircraft, the trailing aircraft experiences reduced turbulence, drag, and increased fuel economy, compared with flying outside of the predetermined formation. Reduced drag and increased fuel economy can, in turn, extend or lengthen the flight range of the trailing aircraft, and reduce operational costs. In one non-limiting aspect, the fuel savings compared with a conventional aircraft can be as high as 10% or more. Yet another advantage of the above described aspects is by utilizing an autopilot system included within the methods and apparatus described, the correct location can be maintained with in the predetermined formation while reducing pilot fatigue caused by the station-keeping actions (i.e. maintaining position actions).

To the extent not already described, the different features and structures of the various aspects of the disclosure can be used in combination with each other as desired. That one feature cannot be illustrated in all of the aspects is not meant to be construed that it cannot be, but is done for brevity of description. Thus, the various features of the different aspects of the disclosure can be mixed and matched as desired to form new aspects, whether or not the new aspects are expressly described. Combinations or permutations of features described herein are covered by this disclosure.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A method of flying at least two aircraft, the method comprising:
   emitting from one of the at least two aircraft a relative navigation grid to define an emitted relative navigation grid;
   calculating a spatial relationship, by a controller module, between the at least two aircraft based on the emitted relative navigation grid;
   determining, by the controller module, if the spatial relationship conforms with a predetermined formation; and
   altering a relative position of at least one aircraft to position the at least two aircraft in the predetermined formation when the spatial relationship does not conform with the predetermined formation;
   wherein the predetermined formation positions one of the at least two aircraft within a wingtip vortex created by another of the at least two aircraft.
2. The method of clause 1, wherein the predetermined formation positions the one of the at least two aircraft within at least a portion of the wingtip vortex generating lift on the one of the at least two aircraft.
3. The method of any preceding clause, wherein emitting includes emitting, from a leading aircraft, the relative navigation grid.
4. The method of any preceding clause, wherein altering the relative position includes altering the relative position of a trailing aircraft, relative to the leading aircraft.
5. The method of any preceding clause, further comprising, receiving, in the trailing aircraft, the emitted relative navigation grid prior to calculating the spatial relationship.
6. The method of any preceding clause, wherein the receiving includes receiving, in at least two detectors of the trailing aircraft, the emitted relative navigation grid, and the calculating includes calculating at least one of a heading or a trajectory for at least one of the aircraft.
7. The method of any preceding clause, wherein the calculating includes calculating at least one of a relative distance between the trailing aircraft and the leading aircraft, an aircraft type of the leading aircraft, or an aircraft weight of the leading aircraft.
8. The method of any preceding clause, wherein the emitting includes emitting from a set of leading aircraft a set of relative navigation grids.
9. The method of any preceding clause, wherein the altering includes altering a relative position of one of the at least two aircraft by way of an autopilot system.
10. The method of any preceding clause, further comprising repeating the emitting, calculating, determining, and altering to maintain the aircraft in the predetermined formation.
11. The method of any preceding clause, wherein the emitting further comprises emitting the relative navigation grid in a direction where an aircraft should be in the predetermined formation.
12. The method of any preceding clause, wherein the direction is at least one of forward and rearward along a direction of travel of an emitting aircraft.
13. The method of any preceding clause, wherein the emitting further comprises emitting the relative navigation grid in at least a sector of a hemisphere relative to an emitting aircraft.
14. The method of any preceding clause, wherein the emitting further comprises emitting the relative navigation grid from multiple locations on an emitting aircraft.
15. A method of flying multiple aircraft, the method comprising:
   emitting from a leading aircraft a relative navigation grid;
   obtaining, by a trailing aircraft, a signal from the relative navigation grid;
   calculating, by a controller module of the trailing aircraft, a spatial relationship between the leading aircraft and the trailing aircraft based on the signal from the relative navigation grid;
   determining, by the controller module, if the spatial relationship conforms with a predetermined formation; and
   altering a relative position of at least one of the leading aircraft or the trailing aircraft to position the trailing aircraft within a wingtip vortex created by the leading aircraft according to the predetermined formation.
16. The method of any preceding clause, wherein the predetermined formation positions the trailing aircraft within at least a portion of the wingtip vortex generating lift on the trailing aircraft.
17. The method of any preceding clause, wherein the calculating includes calculating the spatial relationship based on at least one of a relative distance between the trailing aircraft and the leading aircraft, an aircraft type of the leading aircraft, or an aircraft weight of the leading aircraft.
18. The method of any preceding clause, wherein the altering includes altering a relative position of the at least one of the leading aircraft or trailing aircraft by way of an autopilot system.
19. The method of any preceding clause, wherein calculating and determining by the controller module occur in a closed-loop control system.
20. A method of flying multiple aircraft, the method comprising:
   emitting from a leading aircraft a relative navigation grid;
   obtaining, by a trailing aircraft, a signal from the relative navigation grid;
   calculating, by a controller module of the trailing aircraft, a spatial relationship between the leading aircraft and the trailing aircraft based on the signal from the relative navigation grid;
   determining, by the controller module, if the spatial relationship conforms with a predetermined formation; and
   maintaining a relative position of at least one of the leading aircraft or the trailing aircraft to position the trailing aircraft within a wingtip vortex created by the leading aircraft according to the predetermined formation.

## Claims

1. A method of flying at least two aircraft (2, 4, 102, 104, 202, 204, 302, 304), the method comprising:
emitting from one of the at least two aircraft (2, 4, 102, 104, 202, 204, 302, 304) a relative navigation grid (20, 30, 120, 220) to define an emitted relative navigation grid (20, 30, 120, 220);
calculating a spatial relationship, by a controller module (372), between the at least two aircraft (2, 4, 102, 104, 202, 204, 302, 304) based on the emitted relative navigation grid (20, 30, 120, 220);
determining, by the controller module (372), if the spatial relationship conforms with a predetermined formation (370); and
altering a relative position of at least one aircraft (2, 4, 102, 104, 202, 204, 302, 304) to position the at least two aircraft (2, 4, 102, 104, 202, 204, 302, 304) in the predetermined formation (370) when the spatial relationship does not conform with the predetermined formation (70);
wherein the predetermined formation (370) positions one of the at least two aircraft (2, 4, 102, 104, 202, 204, 302, 304) within a wingtip vortex (378) created by another of the at least two aircraft (2, 4, 102, 104, 202, 204, 302, 304).

2. The method of claim 1, wherein the predetermined formation (370) positions the one of the at least two aircraft (2, 4, 102, 104, 202, 204, 302, 304) within at least a portion of the wingtip vortex (378) generating lift on the one of the at least two aircraft (2, 4, 102, 104, 202, 204, 302, 304).

3. The method of either of claim 1 or 2, wherein emitting includes emitting, from a leading aircraft (2, 102, 202, 302), the relative navigation grid (20, 30, 120, 220).

4. The method of claim 3, wherein altering the relative position includes altering the relative position of a trailing aircraft (4, 104, 204, 304), relative to the leading aircraft (2, 102, 202, 302).

5. The method of claim 4, further comprising, receiving, in the trailing aircraft, the emitted relative navigation grid (20, 30, 120, 220) prior to calculating the spatial relationship.

6. The method of claim 5, wherein the receiving includes receiving, in at least two detectors of the trailing aircraft (4, 104, 204, 304), the emitted relative navigation grid (20, 30, 120, 220), and the calculating includes calculating at least one of a heading or a trajectory for at least one of the aircraft.

7. The method of any of claims 4 to 6, wherein the calculating includes calculating at least one of a relative distance between the trailing aircraft (4, 104, 204, 304) and the leading aircraft (2, 102, 202, 302), an aircraft type of the leading aircraft (2, 102, 202, 302), or an aircraft weight of the leading aircraft (2, 102, 202, 302).

8. The method of any of claims 3 to 7, wherein the emitting includes emitting from a set of leading aircraft a set of relative navigation grids.

9. The method of any preceding claim wherein the altering includes altering a relative position of one of the at least two aircraft (2, 4, 102, 104, 202, 204, 302, 304) by way of an autopilot system (381).

10. The method of any preceding claim, further comprising repeating the emitting, calculating, determining, and altering to maintain the aircraft (2, 4, 102, 104, 202, 204, 302, 304) in the predetermined formation (370).

11. The method of any preceding claim, wherein the emitting further comprises emitting the relative navigation grid (20, 30, 120, 220) in a direction where an aircraft should be in the predetermined formation.

12. The method of claim 11, wherein the direction is at least one of forward and rearward along a direction of travel of an emitting aircraft.

13. The method of any preceding claim, wherein the emitting further comprises emitting the relative navigation grid (20, 30, 120, 220) in at least a sector of a hemisphere relative to an emitting aircraft.

14. The method of any preceding claim, wherein the emitting further comprises emitting the relative navigation grid (20, 30, 120, 220) from multiple locations on an emitting aircraft.

15. A method of flying multiple aircraft (2, 4, 102, 104, 202, 204, 302, 304), the method comprising:
emitting from a leading aircraft (2, 102, 202, 302) a relative navigation grid (20, 30, 120, 220);
obtaining, by a trailing aircraft (4, 104, 204, 304), a signal from the relative navigation grid (20, 30, 120, 220);
calculating, by a controller module (372) of the trailing aircraft (4, 104, 204, 304), a spatial relationship between the leading aircraft (2, 102, 202, 302) and the trailing aircraft (4, 104, 204, 304) based on the signal from the relative navigation grid (20, 30, 120, 220);
determining, by the controller module (372), if the spatial relationship conforms with a predetermined formation (370); and
altering a relative position of at least one of the leading aircraft (2, 102, 202, 302) or the trailing aircraft (4, 104, 204, 304) to position the trailing aircraft (4, 104, 204, 304) within a wingtip vortex (378) created by the leading aircraft (2, 102, 202, 302) according to the predetermined formation (370).
